# EUROPÄISCHE PATENTSCHRIFT

(11) **EP 0 392 388 B1**
(45) Veröffentlichungstag und Bekanntmachung des Hinweises auf die Patenterteilung: **08.12.1993**
(21) Anmeldenummer: 90106637.3
(22) Anmeldetag: 06.04.1990
(51) Int. Cl.: B60T 17/16, B60T 17/08, B61H 5/00

(54) **Bremszylinder für Fahrzeuge, insbesondere Schienenfahrzeuge**
Vehicle brake cylinder, especially for railway vehicles
Cylindre de frein pour véhicules, notamment véhicules ferroviaires

(30) Priorität: 12.04.1989 DE 3912037
(43) Veröffentlichungstag der Anmeldung: 17.10.1990
(73) Patentinhaber: KNORR-BREMSE AG, 80710 München (DE)
(72) Erfinder: Wirth, Xaver, D-8045 Ismaning (DE)

(56) Entgegenhaltungen:
- EP-A- 0 186 767
- DE-A- 2 118 326
- FR-A- 1 460 680

## Beschreibung

Die Erfindung betrifft einen Bremszylinder nach dem Gattungsbegriff des Patentanspruches 1 (siehe z.B. FR-A-1 460 680).

Bei Bremszylindern für Fahrzeuge, welche sowohl eine Betriebsbremseinrichtung als auch eine Parkbremseinrichtung beinhalten, sind Konstruktionen bekannt, bei welchen die Parkbremse als Federspeicherbremse ausgebildet ist. Derartige Federspeicherbremsen fallen bei Druckverlust des Lösedruckes sofort ein, d.h. sie werden durch den Lösedruck eines pneumatischen oder hydraulischen Druckmittels in gelöster Stellung gehaltert und werden bei Druckabbau durch Federkraft in Bremsstellung gebracht. Dieser Druckabbau hat zur Folge, daß bei Schienenfahrzeugen ein selbsttätiges Einbremsen in Kauf zu nehmen ist, wenn ein Druckversagen der Druckmittelanlage vorliegen sollte. Darüberhinaus sind auch Bremszylinderkonstruktionen mit Federspeicherteil bekannt, bei welchen dieser durch einen Klinkenmechanismus verriegelbar, also nicht selbsttätig auslösbar ist. Der Klinkenmechanismus wird mit einem gesonderten Druckkreis entrastet, wenn die Park- bzw. Federspeicherbremse eingelegt werden soll. Der Nachteil derartiger Konstruktionen liegt darin, daß zum Spannen des Federspeicherteils ein Mindestdruck erreicht werden muß, um die Bremse zu lösen. Auch ist das Ausklinken des Federspeicherteils unter Last problematisch.

Bei Bremssattelkonstruktionen sind schließlich direkt wirkende Zylinder d.h. Betriebsbremszylinder mit parallel operierendem Parkbremszylinder bekannt, wobei unabhängig voneinander mit zwei Druckkreisen gearbeitet wird. Eine derartige Kombination eines Betriemsbrems- bzw. Aktivzylinders mit einem parallel dazu angeordneten Parkbremszylinder ist jedoch nur unter den baulich vorteilhaften Gegebenheiten bei Bremssattelkonstruktionen möglich. Bei Bremszangenkonstruktionen sind derartige Kombinationen problematisch hinsichtlich Bauraum und hinsichtlich Abstimmung der Funktion.

Davon ausgehend besteht die Aufgabe der Erfindung darin, einen Bremszylinder für Bremsanlagen von Fahrzeugen, insbesondere von Schienenfahrzeugen zu schaffen, welcher in baulich gedrängter Weise innerhalb eines gemeinsamen Gehäuses eine Betriebsbremse und eine Parkbremse beinhaltet und die Möglichkeit bietet, die Parkbremse so zur Wirkung zu bringen, daß ein unbeabsichtigtes Einbremsen vermeidbar ist. Es soll im besonderen verhindert werden, daß Schienfahrzeuge auf dem freien Feld willkürlich d.h. selbsttätig abbremsen und nur mittels aufwendiger Maßnahmen wieder gelöst werden können. Die eingelegte Parkbremse soll unabhängig von einer Druckmittelversorgung in wirksamer Position bleiben d.h. die Parkbremsstellung soll selbst dann gehalten werden können, wenn ein Druckabbau im Druckmittelsystem des Fahrzeuges vorliegen sollte. Es soll auch möglich sein, das Lösen frei von der Bremslast vorzunehmen d.h. ein Entriegeln der Parkbremsposition soll durchführbar sein, ohne daß gegen die einwirkende Bremskraft entriegelt werden müßte.

Zur Lösung dieser Aufgabe dienen die Merkmale nach dem Kennzeichnungsteil des Patentanspruches 1.

Bei einem gemeinsamen Gehäuse des Bremszylinders sind die Betriebsbremse und die Parkbremse als völlig getrennte Systeme vorgesehen, wobei zum Einlegen der Parbremse nur kurzzeitig eine Fremdkraft, so z.B. hydraulisches Medium zur Verschiebung des Parkbremskolbens erforderlich ist, da sowohl die erreichte Parkbremsstellung als auch die Lösestellung mechanisch verriegelbar sind, also keines Druckhaltens bedürfen. Der Parkbremskolben, welcher bei Druckbeaufschlagung unter Spannen eines Pakets von Federn die Parkbremse einlegt, ist gleichzeitig als Bestandteil des Gesperres anzusehen, welches bei Erreichen der Parkbremsstellung selbsttätig in die Sperr- bzw. Riegellage bezüglich des Parkbremskolbens einrastet, derart, daß eine zeitlich beliebig lang haltende Parkbremsstellung erreicht ist. Auch die Lösestellung der Parkbremse ist verriegelbar und ist in verriegelter Position beliebig lange wirksam. Die Rückführung des Parkbremskolbens aus der Parkbremsstellung in die Lösestellung geschieht nach gegen Federkraft vollzogener Lösebewegung des Sperrkolbens, welcher zu diesem Zweck nur kurzfristig durch Fremdkraft, so beispielsweise durch pneumatisches oder hydraulisches Druckmittel beaufschlagt werden muß. Aus diesem Grund ist es möglich, den Sperrkolben z.B. mit einer sog. "Handpumpeinrichtung" aus seiner Sperrlage in seine Löselage gegen Federkraft zu verschieben. Die Bestandteile der Parkbremsanlage, der Betriebsbremsanlage und des Gesperres unterliegen infolge ihrer baulichen Zuordnung keinerlei Vibrationsgefährdung, da alle Teile in jedem Zustand vorgespannt sind. Die Bauteile sind als einfach anzusehen, da sie nur als Drehteile bzw. Kugelelemente bestehen. Es ist auch keine Verschleißgefahr zu befürchten, wie sie beispielsweise bei gegen hohen Pressungen zu lösenden Klinkensperren in Kauf zu nehmen ist.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.
- Fig.1: ist eine schematische Ansicht einer an einer Bremsscheibe angreifenden Bremszangenanordnung unter Verwendung des Bremszylinders nach der Erfindung;
- Fig.2: ist eine Teilschnittansicht des Bremszylinders unter Darstellung der gelösten Lage der Parkbremse; und
- Fig.3: ist eine der Fig.2 vergleichbare Ansicht unter Darstellung der verriegelten Parkbremsstellung.

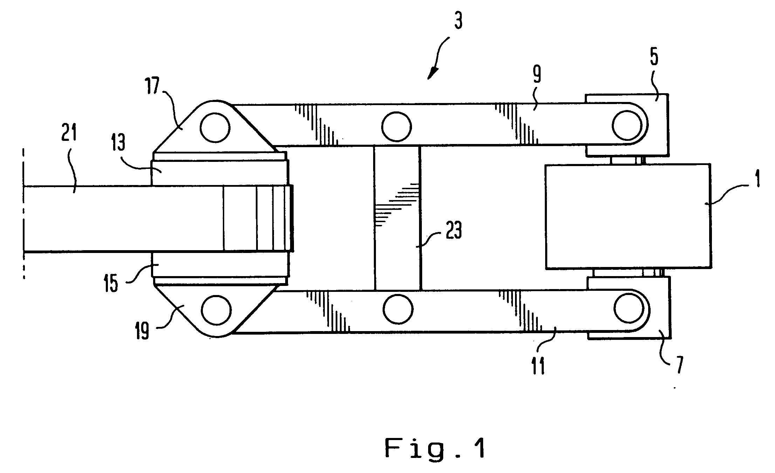

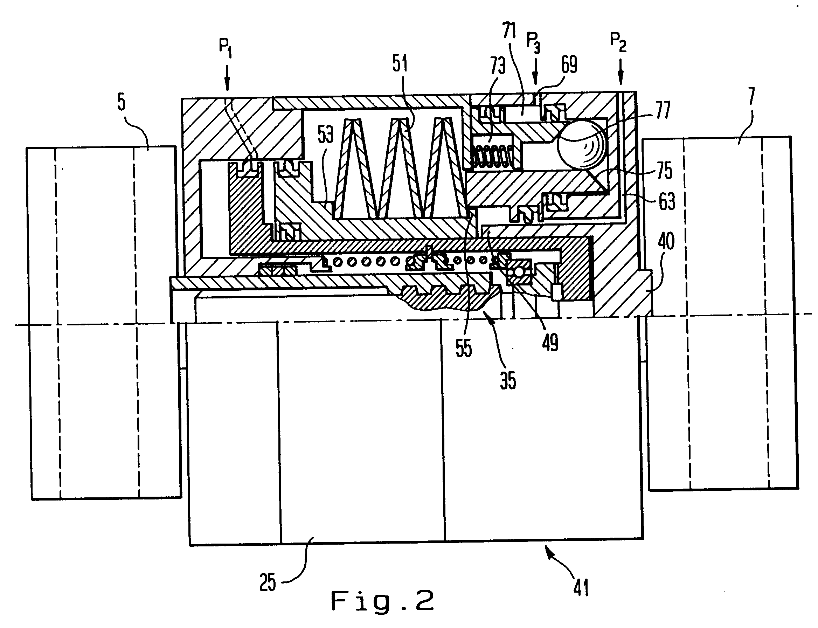

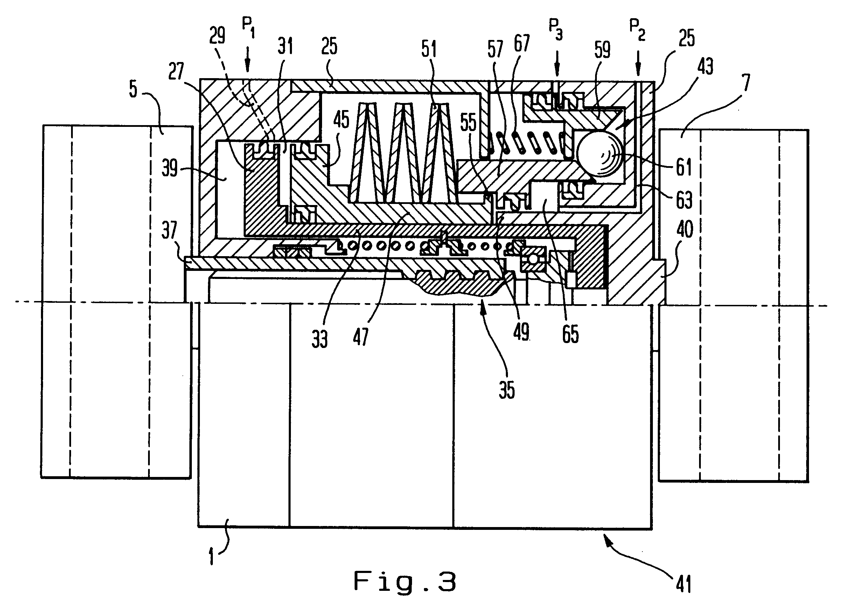

Der in den Figuren 2 und 3 im einzelnen dargestellte Bremszylinder 1 für Bremsanlagen von Fahrzeugen, kann beispielsweise zum Zuspannen einer in Fig.1 schematisch wiedergegebenen Bremszange 3 einer Bremsanlage für Scheibenbremsen von Schienenfahrzeugen verwendet werden. Gemäß Darstellung nach Fig.1 befindet sich der Bremszylinder 1 zwischen Druckstücken 5 und 7 an den Enden von Bremszangenhebeln 9 und 11 , welche mit Bremsbelägen 13 und 15 versehene Bremsbacken 17 und 19 tragen. Die Bremsbacken 17 und 19 wirken auf eine Bremsscheibe 21 ein, wobei die Bremszangenhebel 9 und 11 in bekannter Weise um Drehpunkte eines gemeinsamen Verbindungshebels 23 schwenkbar sind. Bei Betätigung des Bremszylinders 1 wirkt dieser in beiden Richtungen d.h. die Bremszangenhebel 9 und 11 werden im Bereich der Druckstücke 5 und 7 voneinander abgespreizt, so daß die Bremsbacken 17 und 19 zangenartig auf die Bremsscheibe 21 einwirken und diese in bekannter Weise abzubremsen vermögen. Die insofern beschriebene Anlage ist von herkömmlicher Konstruktion und Wirkungsweise.

Der Bremszylinder nach der Erfindung kann jedoch auch bei bekannten Bremssattelkonstruktionen verwendet werden, bei welchen der Betätigungskolben des Bremszylinders direkt, d.h. seitlich auf eine Bremsscheibe einwirkt und das die Bremsscheibe übergreifende Joch mit dem Gehäuse des Bremszylinders verbunden ist. Derartige Bremszylinder- und Bremssattelkonstruktionen werden vorzugsweise bei straßengebundenen Fahrzeugen verwendet, sie sind jedoch auch für den Einsatz bei Schienenfahrzeugen vorgesehen.

Der in Fig.1 dargestellte Bremszylinder ist in Fig.2 und 3 im einzelnen unter Bezugnahme auf die Lösestellung und die Parkbremsstellung einer im Bremszylinder integrierten Parkbremse dargestellt. Der Bremszylinder 1 ist in vorliegendem Fall als Hydraulikzylinder ausgebildet und weist ein Gehäuse 25 auf, innerhalb welchem ein Arbeitskolben 27 druckmittelbeaufschlagbar geführt ist. Das hydraulische Druckmittel wird hierzu über die Leitung 29 in den an den Arbeitskolben 27 angrenzenden Druckraum 31 eingeleitet. Der Arbeitskolben 27 des Bremszylinders der dargestellten Ausführungsform steht mittels eines axialen Fortsatzes 33 und einer im Inneren des Forsatzes gelagerten, nicht näher beschriebenen und an sich bekannten Nachstelleinrichtung 35 mit einem aus dem Gehäuse 25 sich erstreckenden, rohrförmigen Druckstück 37 in Verbindung. Bei Druckbeaufschlagung ( P₁ ) des Arbeitskolbens 27 und dessen Verschiebung innerhalb der am stirnseitigen Ende des Gehäuses befindlichen Ausnehmung 39 wird das Druckstück 37 in Betätigungsrichtung mitgenommen, d.h. es wirkt auf das in Fig.2 und 3 der Zeichnung links befindlich dargestellte Druckstück 5 der Bremszange ein. In Reaktion hierzu spreizt sich das Gehäuse 25 gemäß Fig. 3 nach rechts gerichtet ab, d.h. eine gegenläufige Bewegung des Gehäuses 25 wirkt über ein axiales Druckstück 40 auf das in Fig.2 und 3 rechts befindlich dargestellte Druckstück 7 ein. Bei einer derartigen Betätigung, d.h. Beaufschlagung der beiden Druckstücke 5 und 7, wird die Bremszange in zuvor genannter Weise betätigt, um auf die Bremsscheibe 21 abbremsend einzuwirken.

Der der Erfindung eigene Gedanke ist in dem Aufbau und der Wirkungsweise der dem Bremszylinder zugeordneten Parkbremse 41 verwirklicht, welche mit einem sowohl in der gelösten Stellung als auch in der Parkbremsstellung wirkenden Gesperre 43 ausgestattet ist. Gemäß Fig.2 und 3 ist der Druckraum 31 durch ein nachfolgend als Tandemkolben 45 bezeichnetes Bauteil begrenzt. Der Tandemkolben 45 ist bei normal er Betätigung der eigentlichen Betriebsbremse, d.h. bei Beaufschlagung des Arbeitskolbens 27 dem Druck innerhalb des Druckraums 31 ausgesetzt. Da sich der Tademkolben mittles eines axialen Fortsatzes 47 an einem vom Gehäuse 25 axial gerichtet sich erstreckenden Anschlag 49 abstützt, wird die auf den Tandemkolben 45 bei Druckbeaufschlagung ausgeübte Kraft nach rechts gerichtet, d. h. in Richtung des Druckstücks 7 weitergeleitet. Gleichzeitig dient der Tandemkolben 45 als Träger für Tellerfedern 51 oder Federn anderer Konstruktion, welche am Außenumfang des Tandemkolbens unter Vorspannung geführt sind. Gemäß Fig.2 stützen sich die Tellerfedern 51 in der gelösten Lage an einem am Tandemkolben ausgebildeten linksseitigen Bund 53 als auch an einem am Ende des axialen Fortsatzes (47) ausgebildeten rechtsseitigen Bund (55) ab, wodurch ein Mindestmaß an Vorspannung nach Maßgabe des Abstandes zwischen dem Bund 53 und dem Bund 55 gegeben ist. Die Tellerfedern (51) stützen sich in der Parkbremsstellung mit ihrem in der Darstellung nach Fig.3 rechten Ende an einem Parkbremskolben 57 ab, welcher zusammen mit einem Sperrkolben 59 und am Umfang unter Abstand zueinander angeordneten Sperrelementen, z.B. in Form von Kugeln 61 das Gesperre 43 der Parkbremse bildet. Der Parkbremskolben 57 ist durch Einleiten eines über eine Leitung 63 zugeführten hydraulischen Mediums (P₂) in einen Druckraum 65 beaufschlagbar und gegen die Vorspannung der Tellerfedern 51 nach links gerichtet verschiebbar, wie nachfolgend erläutert ist. Da sich der Parkbremskolben 57 an den Tellerfedern 51 abstützt, wird die von ihm ausgeübte Kraft über das Tellerfederpaket auf den Tandemkolben 45 und von diesem auf den in Anlage befindlichen Arbeitskolben 27 übertragen, d.h, daß durch Druckbeaufschlagung des Parkbremskolbens 57 der Arbeitskolben 27 und somit das Druckstück 37 nach links gerichtet verschoben werden. Da sich der hydraulische Druck im Druckraum 65 auch am Gehäuse, d.h. an einer gehäuseseitigen Innenwand abstützt, erfolgt als Reaktion zur vorgenannten Verschiebung des Parkbremskolbens 57 eine nach rechts gerichtete Verschiebung des Gehäuses 25, mit der Folge, daß bei Betätigung des Parkbremskolbens (57) auch das Druckstück 7 beaufschlagt wird.

Der dem Parkbremskolben 57 zugeordnete, radial außerhalb von diesem angeordnete Sperrkolben 59 wird durch mehrere Federn 67 in eine in der Darstellung rechte Position (Fig.3) verspannt und ist in gleicher Weise wie der Parkbremskolben durch hydraulisches Medium (P₃) beaufschlagbar. Das hydraulische Medium kann durch die Öffnung 69 in einen vom Sperrkolben 59 begrenzten Druckraum 71 eingeleitet werden, wobei das hydraulische Medium in der Lage ist, die am Umfang in einer Ringkammer 73 angeordneten Federn 67 zusammenzudrücken, wie dies Fig.2 veranschaulicht.

Sowohl am Parkbremskolben 57 als auch am Sperrkolben 59 sind keilförmig ausgebildete Sperrflächen 75 und 77 vorgesehen, welche in Verbindung mit den Sperrelementen in Form der Kugeln 61 dazu beitragen, entweder die Parkbremsstellung oder die gelöste Stellung der Parkbremse zu verriegeln, wie nachfolgend erläutert ist. In der Position nach Fig.2 befindet sich die Parkbremse in gelöster Lage, in welcher der Druckraum 65 drucklos ist, wobei die Tellerfedern 51 den Parkbremskolben 57 in seine gemäß Fig.2 rechte Endposition verschoben haben. Diese Verschiebung ist erst dann möglich, wenn der Sperrkolben 59 durch Einleiten von hydraulischem Medium in den Druckraum 71 in seine gemäß Darstellung linke Endlage bewegt wurde, derart, daß sich die Kugeln 61 aus der Position nach Fig.3 in die Position nach Fig.2 bewegen konnten.

Die Position nach Fig.3 gibt die Sperrlage in der Parkbremsstellung wieder, in welcher in gleicher Weise wie bei der zuvor genannten gelösten Position eine Druckentlastung des Druckraumes 65 als auch des Druckraumes 71 ermöglicht ist, wenn sich die Kugeln 61 in der dargestellten Sperrlage befinden, d.h. in einer Position, in welcher der Parkbremskolben 57 durch die Tellerfedern nicht mehr in seine rechte Ausgangsposition zurückgeschoben werden kann, da dieser Bewegung die Kugeln 61 entgegenwirken. Bei der Verschiebung der Kugeln aus der radial äußeren Sperrlage nach Fig.2 in die radial innere Sperrlage nach Fig.3 sind die beiden Sperrflächen 75 und 77 wechselweise wirksam, d.h. nach Verschiebung des Parkbremskolbens 57 in seine linke Endposition kommt die Sperrfläche 77 des Sperrkolbens 59 zur Wirkung und drückt die Kugeln 61 radial nach innen gerichtet, während bei Druckbeaufschlagung des Druckraums 71 und nach links gerichteter Verschiebung des Sperrkolbens 59 die Sperrfläche 75 des Parkbremskolbens zur Wirkung gelangt und die Kugeln 61 in den nunmehr freigewordenen, radial außen liegenden Bereich stirnseitig bezüglich des Sperrkolbens 59 verschiebt.

Die Wirkungsweise des vorstehend anhand seiner Bauteile erläuterten Bremszylinders mit integrierter Parkbremse ist wie folgt:

Das direkte aktive Bremsen, d.h. die Betriebsbremsung mit Hilfe des Arbeitskolbens 27 durch Einleiten hydraulischen Mediums in den Druckraum 31 wurde vorstehend im wesentlichen erläutert, weshalb auf eine Wiederholung verzichtet wird.

Soll ein Fahrzeug, z.B. ein Schienenfahrzeug, abgestellt werden, dann geschieht dies durch Einlegen der Parkbremse. Um zu erreichen, daß die Parkbremse auch bei Druckabfall oder Ausfall der hydraulischen Druckmittelversorgung in Parkbremsstellung bleibt, ist die vorstehend genannte Sperr- und Riegeleinrichtung vorgesehen. Zum Einlegen der Parkbremse wird, ausgehend von der gelösten Position nach Fig. 2, hydraulisches Druckmittel in die Leitung 63 und in den Druckraum 65 eingeleitet, mit der Folge, daß der Parkbremskolben 57 nach links gerichtet verschoben wird (Fig. 3) und unter Zusammendrücken des Pakets von Tellerfedern 51 auf den Tandemkolben 45 und somit auf den in Anlage befindlichen Arbeitskolben 27 einwirkt, so daß über die in Wirkverbindung befindliche Nachstellvorrichtung 35 das Druckstück 37 ausgefahren, d.h. gemäß Fig.3 nach links gerichtet verschoben wird. Gleichzeitig wird das Gehäuse 1 in entgegengesetzter Richtung abgespreizt, d..h., daß beide Druckstücke 5 und 7 beaufschlagt werden und die Bremszange gegenüber der Bremsscheibe 21 schließt. Während der nach links gerichteten Verschiebung des Parkbremskolbens 57 kann sich der Sperrkolben 59, ausgehend von der Position nach Fig. 2, in die in Fig.3 dargestellte Lage unter Einwirkung der vorgespannten Federn 67 verschieben, da durch das Verschieben des Parkbremskolbens der radial innen befindliche Raum zum Eintauchen der Kugeln 61 freigegeben wird. Nach Erreichen der Sperrlage gemäß Fig.3, d.h. nach Erreichen der Parkbremsstellung, kann der Druck am Druckraum 65 abgebaut werden; die Parkbremsstellung wird somit allein durch mechanische Mittel gehalten, ein unbeabsichtigtes Lösen ist vollkommen ausgeschlossen. Während der vorgenannten Parkbremsung bleibt der Druckraum 31 drucklos, d.h. die Betriebsbremse ist während der Betätigung der Parkbremse inaktiv.

Zum Lösen der Parkbremse aus der Position nach Fig.3 in die Position nach Fig.2 ist es erforderlich, daß sich die Kugeln 61 radial nach außen gerichtet verlagern können, um das Gesperre in die in Fig.2 wiedergegebene Lage zu bringen. Zu diesem Zweck wird hydraulisches Medium in den Druckraum 71 eingeleitet, um den Sperrkolben 59 gegen die Kraft der Federn 67 in seine linke Endlage nach Fig.2 zu verschieben, mit der Folge, daß das Paket der Tellerfedern 51 den Parkbremskolben 57 bei drucklosem Druckraum 65 in seine rechte Endlage verschieben kann und als Folge davon die Sperrfläche 75 die Kugeln 61 in den vom Sperrkolben 59 freigegebenen radial außen liegenden Freiraum drückt. In dieser in Fig.2 wiedergegebenen Lage ist nunmehr der Sperrkolben 59 gesperrt, wenn der Druckraum 71 druckentlastet wird, da die Kugeln 61 nicht nach innen ausweichen können. Auch die gelöste Lage der Parkbremse, in welcher keine Kraft auf die Druckstücke 5 und 7 ausgeübt wird, ist somit drucklos, also allein durch mechanische Mittel gehalten. Diese gelöste Position der Parkbremse entspricht der normalen Betriebsstellung des Bremszylinders während der Fahrt, während welcher normalerweise nur mit der eigentlichen Betriebsbremse, d.h. also durch Beaufschlagung des Arbeitskolbens 27 gearbeitet wird. Wie vorstehend erläutert ist, hat der normale Betriebsbremsdruck (P₁), welcher im Druckraum 31 zur Wirkung gelangt, keinerlei Einwirkung auf das Gesperre 43, da sich der Fortsatz 47 am Anschlag 49 des Gehäuses abstützt und somit bei Betriebsbremsung eine relative Spreizung zwischen Druckstück 37 und Gehäuse 25 stattfindet, um die Bremszange gegenüber der Bremsscheibe 21 zu schließen.

Die beschriebene Betriebs- und Parkbremsanordnung ist von besonderem Vorteil in Anwendung an Schienenfahrzeugen, bei welchen ein selbsttätiges Einfallen einer Parkbremse infolge Druckausfall des hydraulischen Systems vermieden werden soll. Sowohl das Einlegen der Parkbremse als auch das Lösen derselben kann mit unabhängig voneinander bestehenden hydraulischen oder sonstigen Druckmittelvorräten geschehen, wobei auch sog. "Handpumpanlagen" oder dgl. Hilfssyteme verwendbar sind, um unabhängig vom hydraulischen Arbeitsmedium der Betriebsbremse das Einlegen der Parkbremse und das Lösen derselben vollziehen zu können.

Anstelle des anhand der Ausführungsform nach Fig.2 und 3 erläuterten Gesperres mit Hilfe von Kugeln 61 sind auch andere Sperrelemente denkbar, welche im Zusammenwirken mit dem Parkbremskolben und dem Sperrkolben wechselweise in hubabhängig freigegebene Freiräume verschiebbar sind, um die erforderlichen Sperrpositionen zu erzielen. Es ist auch grundsätzlich möglich, das Verschieben des Parkbremskolbens und des Sperrkolbens rein mechanisch durchzuführen, wobei der Parkbremskolben und der Sperrkolben z.B. je mit einem in ihrer axialen Verlängerung sich erstreckenden Spindelantrieb ausgestattet sein können, um axiale Bewegungen entsprechend Spindeldrehung zu vollziehen. Bei einer derartigen mechanischen Betätigung des Gesperres kann natürlich auf die Dichtungen der beiden Kolben verzichtet werden. Grundsätzlich ist es auch möglich, die mechanische Betätigung als weiteren Hilfsantrieb zur hydraulischen Betätigung vorzusehen. Auch ist es möglich, anstelle der Tellerfedern 51 ein anderes Federsystem vorzusehen, so wie es auch möglich ist, anstelle hydraulischen Arbeitsmediums pneumatisches Druckmittel zu verwenden.

### Bezugszeichenliste

- 1: Bremszylinder
- 3: Bremszange
- 5: Druckstück
- 7: Druckstück
- 9: Bremszangenhebel
- 11: Bremszangenhebel
- 13: Bremsbelag
- 15: Bremsbelag
- 17: Bremsbacke
- 19: Bremsbacke
- 21: Bremsscheibe
- 23: Verbindungshebel
- 25: Gehäuse
- 27: Arbeitskolben
- 29: Leitung
- 31: Druckraum
- 33: Fortsatz
- 35: Nachstelleinrichtung
- 37: Druckstück
- 39: Ausnehmung
- 40: Druckstück
- 41: Parkbremse
- 43: Gesperre
- 45: Tandemkolben
- 47: Fortsatz
- 49: Anschlag
- 51: Tellerfeder
- 53: Bund
- 55: Bund
- 57: Parkbremskolben
- 59: Sperrkolben
- 61: Kugel
- 63: Leitung
- 65: Druckraum
- 67: Feder
- 69: Öffnung
- 71: Druckraum
- 73: Ringkammer
- 75: Sperrfläche
- 77: Sperrfläche

## Patentansprüche

1. Bremszylinder für Fahrzeuge, insbesondere Schienenfahrzeuge, mit einer in einem Gehäuse angeordneten, durch Druckmittel beaufschlagbaren und mittels Bremsorgane auf eine Bremsscheibe einwirkenden Betriebsbremseinrichtung und einer dieser im gemeinsamen Gehäuse zugeordneten, auf ein gemeinsames Betätigungselement einwirkenden Parkbremseinrichtung, gekennzeichnet durch folgende Merkmale:
a) die Parkbremseinrichtung weist einen Kolben (Tandemkolben 45) auf, welcher den Druckraum (31) für den Arbeitskolben (27) der Betriebsbremse begrenzt, wobei der Tandemkolben (45) einerseits in Anlage am Arbeitskolben (27) der Betriebsbremse und andererseits in Anlage mit dem Gehäuse (25) des Bremszylinders (1) bewegbar ist, derart, daß vom Tandemkolben (45) in Richtung des Arbeitskolbens (27) ausgeübte Kräfte auf das Druckstück des Bremszylinders (1) weitergeleitet werden und sich das Gehäuse (25) bei Betriebsbremsung in entgegengesetzter Richtung abspreizt;
b) der Tandemkolben trägt an seinem Außenumfang ein Paket vorgespannter Tellerfedern (51), welche durch einen vorzugsweise durch Druckmittel beaufschlagbaren Parkbremskolben (57) zusammendrückbar sind, derart, daß die von den Tellerfedern (51) auf den Tandemkolben übertragene Kraft auf den Arbeitskolben (27) der Betriebsbremse und von dieser auf das Druckstück des Bremszylinders (1) Ubertragbar ist;
c) der Druckraum (65) des Parkbremskolbens (57) ist in Spreizrichtung des Gehäuses (25) von diesem begrenzt;
d) der Parkbremskolben (57) ist Bestandteil eines Gesperres (43), welches bei betätigtem Parkbremskolben an dessen Rückseite unter Federkraft einwirkende Verriegelungselemente aufweist; und
e) das Gesperre (43) ist fernerhin mit einem gleichfalls vorzugsweise durch Druckmittel beaufschlagbaren, gegen Federkraft verschiebbaren Sperrkolben (59) versehen, welcher in Parkbremsstellung des Parkbremskolbens unter Federkraft die Verriegelungselemente in Sperrlage bezüglich des Parkbremskolbens (57) verschiebt.

2. Bremszylinder nach Anspruch 1, dadurch gekennzeicht, daß der Sperrkolben (59) durch die Kraft von Federn (67) selbsttätig in Sperrlage bezüglich des Parkbremskolbens (57) verschiebbar ist, wobei der Sperrkolben (59) bei in Parkbremsstellung befindlichem Parkbremskolben (57) gegenüber als Verriegelungselemente wirkenden Kugeln (61) zur Wirkung gelangt, welche in eine den selbsttätigen Rücklauf des Parkbremskolbens (57) sperrende Lage verschiebbar sind.

3. Bremszylinder nach einem der vorangehenden Ansprüche, dadurch gekennzeichnet, daß der Sperrkolben (59) vorzugsweise durch hydraulisches Druckmittel gegen die Kraft der Federn (67) aus seiner Sperrlage in eine Freigabeposition verschiebbar ist, derart, daß die den selbsttätigen Rücklauf des Parkbremskolbens (57) sperrenden Kugeln (61) aus ihrer Sperrlage in einen durch die Verschiebung des Sperrkolbens entstehenden Freiraum verschiebbar sind.

4. Bremszylinder nach einem der vorangehenden Ansprüche, dadurch gekennzeichnet, daß sowohl der Parkbremskolben (57) als auch der Sperrkolben (59) jeweils an ihrem den Kugeln (61) zugewandten Ende keilförmig verlaufende Sperrflächen (75,77) aufweisen, welche wechselweise in Anlage mit den Kugeln (61) sind, wobei sich die Kugeln (61) in Sperrlage der Parkbremse an der Sperrfläche (75) des Parkbremskolbens (57) befinden, während sie sich in gelöster Position der Parkbremseinrichtung in Sperrlage an der Sperrfläche (77) des Sperrkolbens (59) befinden.

5. Bremszylinder nach einem der vorangehenden Ansprüche, dadurch gekennzeichnet, daß der Arbeitskolben (27), der Parkbremskolben (57) und der Sperrkolben (59) je eine gesonderte hydraulische Druckmittelversorgung (P₁; P₂; P₃) aufweisen, wobei das Druckmittel für den Parkbremskolben und den Sperrkolben mittels einer Hilfs- Pumpeinrichtung zuführbar ist.

## Claims

1. Vehicle brake cylinder, especially for rail vehicles, with a service brake system arranged in a housing capable of being pressurized by a pressure fluid and acting via brake devices on a brake disc and with a parking brake system allocated to the latter in a common housing and acting on a common actuating element, wherein:
a) the parking brake system features a piston (tandem piston 45) that limits the pressure chamber (31) for the operating piston (27) of the service brake, with the tandem piston (45) capable of being applied on one hand against the operating piston (27) of the service brake and on the other hand against the housing (25) of the brake cylinder (1), such that the forces exerted by the tandem piston (45) in the direction of the operating piston (27) are transmitted to the thrust member of the brake cylinder (1) and that the housing (25) spreads off in opposite direction at service brake application.
b) the tandem piston bears at its outer circumference a stack of precompressed disc springs (51) that are capable of being compressed by a parking brake piston (57) that can be preferably pressurized by a pressure fluid such that the force transmitted by the disc springs (51) to the tandem piston is capable of being transmitted to the operating piston (27) of the service brake and from there to the thrust member of the brake cylinder (1);
c) the pressure chamber (65) of the parking brake piston (57) is limited in spreading direction of the housing (25) by the latter;
d) the parking brake piston (57) forms part of a locking mechanism (43) that with the parking brake piston actuated features locking elements that are effective on its rear side under the action of spring force; and
e) the locking mechanism (43) is furthermore povided with a locking piston (59) that may also be preferably pressurized by pressure fluid and can be shifted against the spring force, said locking piston displacing, under the action of spring force, the locking elements to locking position relative to the parking brake piston (57) with the latter being in parking brake position.

2. Brake cylinder according to claim 1, wherein the locking piston (59), due to the force of springs (67), is capable of being automatically shifted to the locking position relative to the parking brake piston (57) with the locking piston (59) taking effect on the balls (61) that act as locking elements, said balls being displaceable to a position locking the automatic return of the parking brake piston (57) when the latter is in parking position.

3. Brake cylinder according to one of the above claims, wherein the locking piston (59) is capable of being shifted, preferably by an hydraulic pressure fluid, against the force of springs (67) from its locked position to a released position, such that the balls (61) locking the automatic return of the parking brake piston (57) can be shifted from their locked position to a free space resulting from the displacement of the locking piston.

4. Brake cylinder according to one of the above claims, wherein both the parking brake piston (57) and the locking piston (59) feature wedge-shaped locking surfaces (75, 77) at their ends facing the balls (61) respectively that are alternately in contact with the balls (61), with the balls (61) being located at the locking surface (75) of the parking brake piston (57) with the parking brake in locking position whereas with the parking brake system in released position said balls are located in locking position at the locking surface (77) of the locking piston (59).

5. Brake cylinder according to one of the above claims, wherein the operating piston (27), the parking brake piston (57) and the locking piston (59) feature a separate hydraulic pressure fluid supply (P₁; P₂; P₃) respectively, whereby the pressure fluid for the parking brake piston and the locking piston can be fed by means of an auxiliary pump system.

## Revendications

1. Cylindre de frein pour véhicules, notamment véhicules sur rails, comportant un dispositif de freinage de service qui est disposé dans un boîtier, qui peut être chargé par un fluide sous pression et qui agit au moyen d'éléments de frein sur un disque de frein, et un dispositif de freinage de stationnement, qui est associé au dispositif de freinage de service, dans le boîtier commun et agit sur un élément d'actionnement commun,
caractérisé par les particularités suivantes :
a) le dispositif de freinage de stationnement comporte un piston (piston tandem 45), qui limite la chambre de pression (31) pour le piston de travail (27) du frein de service, le piston tandem (45) pouvant être amené, d'une part, contre le piston de travail (27) du frein de service, et, d'autre part, contre le boîtier (25) du cylindre de frein (1), de telle sorte que des forces exercées par le piston tandem (45) en direction du piston de travail (27), sont retransmises à l'élément de poussee du cylindre de frein (1) et que le boitier (25) s'écarte en sens opposé, lors du freinage de service;
b) le piston tandem porte, sur sa périphérie extérieure, un paquet de ressorts Belleville précontraints (51), qui peuvent être comprimés par un piston (57) du frein de stationnement, qui peut être chargé de préférence par un fluide sous pression, de sorte que la force appliquée par les ressorts Belleville (51) au piston tandem peut être transmise au piston de travail (27) du frein de service et, par ce dernier, à l'élément de poussée du cylindre de frein (1);
c) la chambre de pression (65) du piston (57) du frein de stationnement est limitée par le boîtier (25), dans la direction d'écartement de ce dernier;
d) le piston (55) du frein de stationnement fait partie d'un dispositif d'encliquetage (43), qui possède des éléments de verrouillage qui agissent sur la face arrière de ce piston sous l'action de la force d'un ressort, lorsque le piston du frein de stationnement est actionné; et
e) le dispositif d'encliquetage (43) est en outre équipé d'un piston de blocage (59), qui peut être également chargé de préférence par un fluide sous pression et peut être déplacé à l'encontre de la force d'un ressort et qui, lorsque le piston du frein de stationnement est dans la position de freinage de stationnement, amène, sous l'action de la force d'un ressort, les éléments de verrouillage dans la position bloquée par rapport au piston (57) du frein de stationnement.

2. Cylindre de frein selon la revendication 1, caractérisé par le fait que le piston de blocage (59) peut être amené automatiquement, par la force de ressorts (67), dans la position bloquée par rapport au piston (57) du frein de stationnement et que, lorsque le piston (57) du frein de stationnement est situé dans la position de freinage de stationnement, le piston de blocage (59) agit par rapport à des billes (60) agissant en tant qu'éléments de verrouillage et qui peuvent être amenées dans une position bloquant le retour automatique du piston (57) du frein de stationnement.

3. Cylindre de frein selon l'une des revendications précédentes, caractérisé par le fait que le piston de blocage (59) peut être déplacé de préférence à l'aide d'un fluide hydraulique sous pression, à l'encontre de la force des ressorts (76), depuis sa position bloquée dans une position libérée de telle sorte que les billes (61), qui bloquent le retour automatique du piston (57) du frein de service, peuvent être déplacés de leur position bloquée, dans un espace libre se formant sous l'effet du déplacement du piston de blocage.

4. Cylindre de frein selon l'une des revendications précédentes, caractérisé par le fait qu'aussi bien le piston (57) du frein de stationnement que le piston de blocage (59) possèdent respectivement au niveau de leur extrémité tournée vers les billes (61), des surfaces de blocage en forme de coin (75,77), contre lesquelles s'appliquent alternativement les billes (61), et que, lorsque le frein de stationnement est dans la position bloquée, les billes (61) sont situées contre la surface de blocage (64) du piston (57) du frein de stationnement, alors que lorsque le dispositif de freinage de stationnement est dans la position desserrée, les billes sont situées dans leur position bloquée contre la surface de blocage (67) du piston de blocage (59).

5. Cylindre de frein selon l'une des revendications précédentes, caractérisé par le fait que le piston de travail (27), le piston (57) du frein de stationnement et le piston de blocage (59) possèdent respectivement un système hydraulique particulier d'alimentation en fluide sous pression (P₁;P₂;P₃), le fluide sous pression pour le piston du frein de stationnement et pour le piston de blocage pouvant être envoyés au moyen d'un dispositif de pompe auxiliaire.
